Europäisches Patentamt

European Patent Office

Office européen des brevets

(11) Publication number: **0 117 746**
A2

# (12) EUROPEAN PATENT APPLICATION

(21) Application number: **84301243.6**

(22) Date of filing: **27.02.84**

(51) Int. Cl.³: **A 47 F 3/12,** F 16 B 12/20, F 16 B 12/46

(30) Priority: **01.03.83 GB 8305577**

(43) Date of publication of application: **05.09.84**
**Bulletin 84/36**

(84) Designated Contracting States: **AT BE CH DE FR IT LI NL SE**

(71) Applicant: **Lewis, Peter Robert, 5 Station Road, Berkhamsted Hertfordshire (GB)**

(72) Inventor: **Lewis, Peter Robert, 5 Station Road, Berkhamsted Hertfordshire (GB)**

(74) Representative: **Bernard, Alan Peter et al, F.J. CLEVELAND & COMPANY 40/43 Chancery Lane, London WC2A 1JQ (GB)**

(54) Releasable connector.

㋘ A releasable connector for panels, e.g. to create a display structure for shopfitting includes a receiving member 1 having angled slots each for receiving a panel, presented edge-on. A retaining member 14 in the form of a wedge is associated with each slot and is inserted to bear on the edge region of the inserted panel to grip it. The wedge has a latching mechanism enabling it to retain its inserted location and is guided by guide slots in the receiving members. Complete removal of the wedges is prevented to avoid loss.

RELEASABLE CONNECTOR

DESCRIPTION

This invention relates to releasable connectors for making an edge-on connection to a panel.

One application of the present invention is to the assembly of glass or acrylic panels into larger structures, for example display stands composed of cubic cells. Hitherto, the connectors used to interconnect the panels in such structures have comprised either plastics grips with several angularly-disposed pairs of jaws for effecting a frictional engagement with an inserted panel, or brackets with plastics screws which are tightened to bear on inserted panels.

The primary disadvantage of the simple grips is that they prevent individual panels being removed easily

- 2 -

from the structure; removal of one panel may involve the partial or complete dismantling of the whole structure. The use of brackets and screws produces a more stable structure in which individual panels can be removed without disturbing the rest of the structure. Since the brackets are usually made from metal these connectors are more prominent than transparent plastics connectors, and can be unsightly.

In many circumstances a suitable screw driver may not be readily available, and the screws may become damaged or lost. Such factors can result in an imperfect installation, or at least create a nuisance for an inexperienced person attempting to assemble the structure.

The present invention seeks to provide a connector, which overcomes at least some of these disadvantages.

Accordingly, the present invention provides a releasable connector for making an edge-on connection to a panel, comprising;

a receiving element having locating means for receiving and locating a presented edge region of a panel, and

a retaining member adapted for sliding movement with respect to the receiving element, such that it may be slid to a position at which it bears on a presented panel, and including releasable latching means operative to engage the receiving element when the retaining element is slid to said position.

The locating means may comprise a slot defined by the receiving element.

In a preferred form the retaining member, when released from said position, remains attached to the receiving element.

The latching means may comprise a hook portion of the retaining member which by resilient deformation may be caused to engage a complementary recess in the receiving element.

The connector may include a plurality of said slots and a corresponding number of retaining members thereby enabling several panels to be interconnected. The slots may be angularly disposed enabling a composite cell structure of panels to be constructed using several of the connectors.

- 4 -

In one embodiment, the receiving element includes a respective guide portion associated with each slot, and each retaining member comprises a pair of resilient jaws, the connector being assembled by the sliding insertion of the jaws over the guide portion and thereby urging one of the jaws against a previously located panel.

Embodiments of the invention will now be described, by way of example only, with reference to the accompanying drawings. In the drawings.

Figure 1 is an isometric view of an assembled 4-way connector in accordance with the invention;

Figures 2a and 2b are cross-sectional views on an enlarged scale of part of the connector of Figure 1 illustrating successive stages in the assembly of the connector.

Figure 3 is an exploded view of the connector illustrating its components;

Figure 4 is a perspective view of two parts of a receiving element of an alternative form of connector in accordance with the invention;

Figure 5 illustrates the assembled receiving element of Figure 4 together with a retaining member;

Figures 6 and 7 show a part of the connector of Figures 4 and 5 illustrating successive steps in the assembly of the connector; and

Figure 8 is a cross-sectional view of a modified version of the connector of Figure 1.

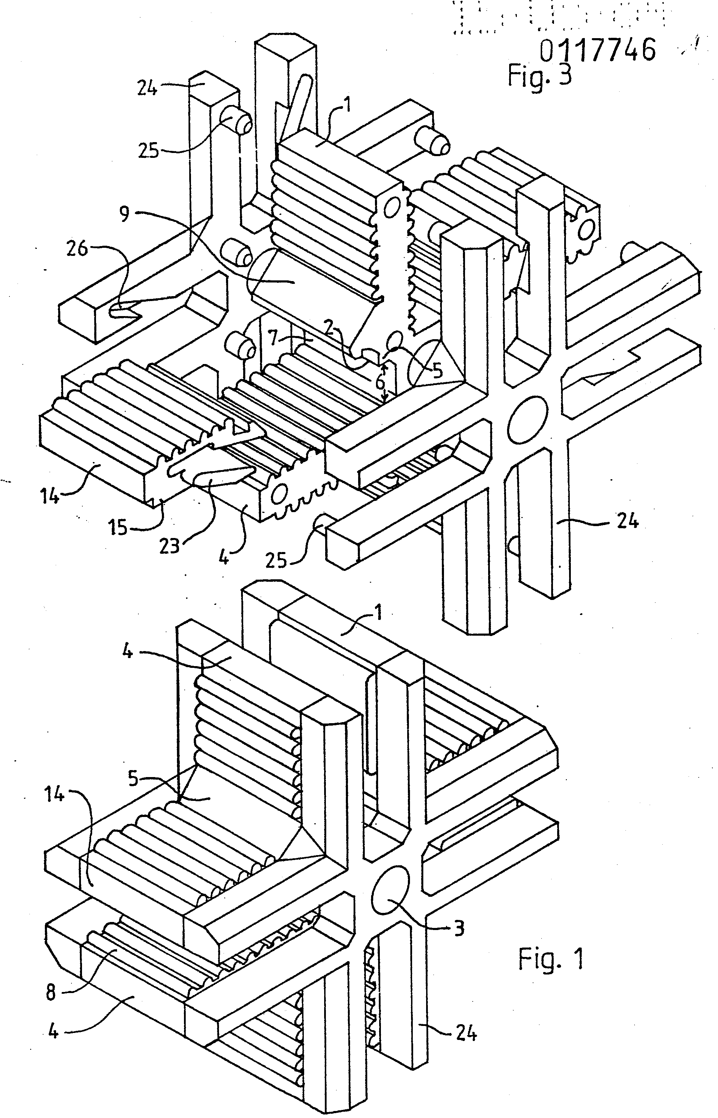

Referring to Figures 1 to 3, a connector for glass or acrylic panels is fabricated from plastics material and comprises a central, cruciform receiving element 1 having four locating limbs 4 spaced at 90 degree intervals and emanating at their inner extremities, from a spine 3. Each locating limb 4 is approximately square in plan. Associated with each limb 4 and spaced therefrom is a respective short ledge 5 extending from the spine 3 and having a flat undersurface 2 facing the locating limb. A panel-receiving slot 6 is defined by the facing surfaces of the limb 4 and the ledge 5 and the outer surface 7 of the spine 3 that extends between these surfaces. The major surface of the limb 4 has a number of parallel transverse ribs 8 upstanding from it. These ribs increase the frictional engagement of the surface against a received panel.

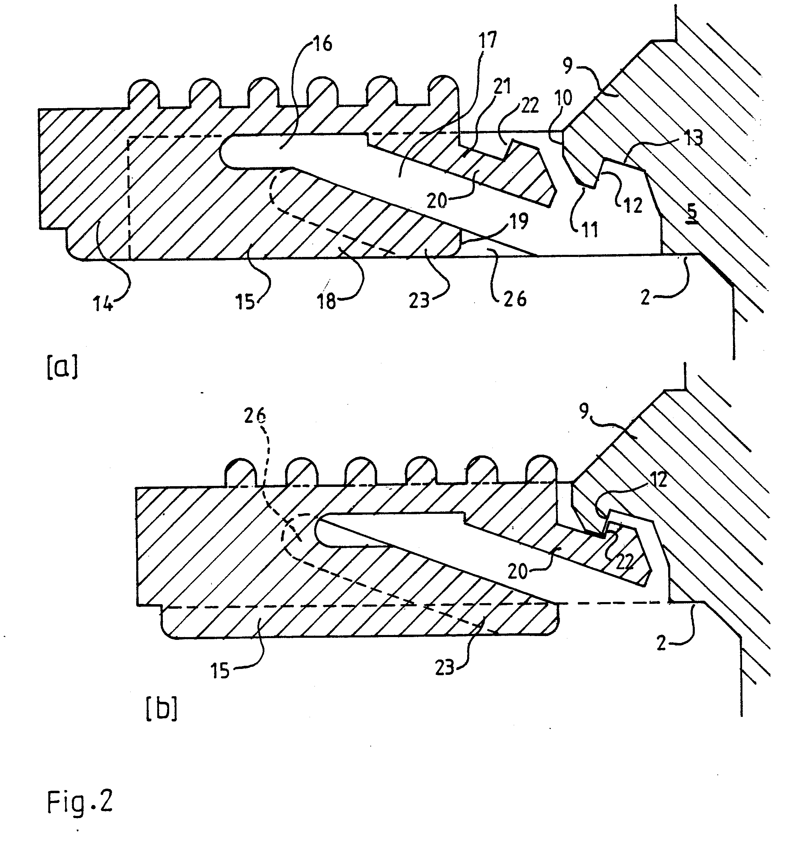

The outward end of each ledge 5 includes an overhanging projection 9 extending across its upper outer edge; this is most clearly shown in Figures 2a and 2b. The outer surface 10 of the projection is perpendicular to the under surface 2 of the limb, and the under surface 11 of the projection 9 slopes obliquely. The rear surface 12 of the overhanging projection is generally perpendicular to its under surface 11 spaced from the main forward surface of the ledge 5 by an obliquely sloping undersurface 13.

The connector also includes four retaining members 14. Each retaining member 14 has a general shape similar to that of the limbs 4 so that it interfits with a ledge 5 and extends into general correspondence with the opposing limb 4. A projecting rectangular portion 15 of the retaining member faces the slot.

The retaining member includes within it a cavity 16 opening at the inner end of the retaining member via an oblique cavity 17. The portion 18 of the retaining member on the slot side of the cavity 17 is thus tapered to a free end 19. The portion of the retaing member on the other side of the cavity 17 has at its inner end an elongate hook portion 20. The hook portion comprises neck portion 21 sloping downwardly away from the main body of the retaining member, and a head portion having an abutment surface 22 perpendicular to the top surface of the neck portion 21.

The sides of the retaining member between its inner and outer ends include lateral wings 23 sloping down to the plane of the base surface of the retaining member, where they are truncated to conform thereto.

A pair of cruciform side pieces 24 are shaped with four pairs of limbs corresponding to the limbs formed by the receiving element 1 together with the attached retaining members 14. The side pieces 24 include a number of projecting spigots 25 corresponding to sockets in the sides of the receiving element. By means of the spigot and socket connections the side pieces are push-fitted and securely fixed to the receiving element 1. The one limb of each pair of limbs of a side piece 24 that is adjacent a retaining

- 8 -

member includes an angled socket 26 for receiving one of the lateral wings 23 projecting from the retaining member. The sockets 26 are longer in extent than the wings 23 and limited translational movement of the retaining members can be accommodated.

In a typical application, several of the connectors are used to connect panels of tempered glass of 5mm thickness to form a display stand of cubic cells. To use a connector, the retaining members are initially disengaged and moved outwardly from the receiving element 1 until the wings 23 are stopped by the closed ends of the sockets 26. In this position, shown in Figure 2a, the base surface of the retaining member is approximately co-planar with the under surface 2 of the ledge 5. The edge of a glass panel is introduced into the slot formed between the two limbs. The retaining member is then pushed inwardly, and the slope of the socket 26 causes the portion 15 at the base of the retaining member to bear on the glass in a wedge-like action. The retaining member is squeezed to force the head of the hook portion 20 beneath the overhanging projection 9 from the forward end of limb 5. The sloping surfaces of the neck portion 21 and the overhanging projection assist the motion. The head of the hook portion then snap-fits into the recess behind the overhanging projection 9 and its abutment surface 22, acting against the rear surface 12 of the overhang, prevents rearward dislocation of the retaining member, this position is shown in Figure 2b.

A panel can be removed from an assembly without disloging other panels simply by removing it from its connectors. This is achieved by squeezing a retaining member and moving it outwardly, until its lower surface no longer bears on the panel.

It will be appreciated that two or three-way versions of this connector can be constructed with little additional complication. Furthermore it is merely necessary to change the retaining elements to convert the connector to one which will accept panels of a different thickness. This alone represents a significant advantage over prior proposals.

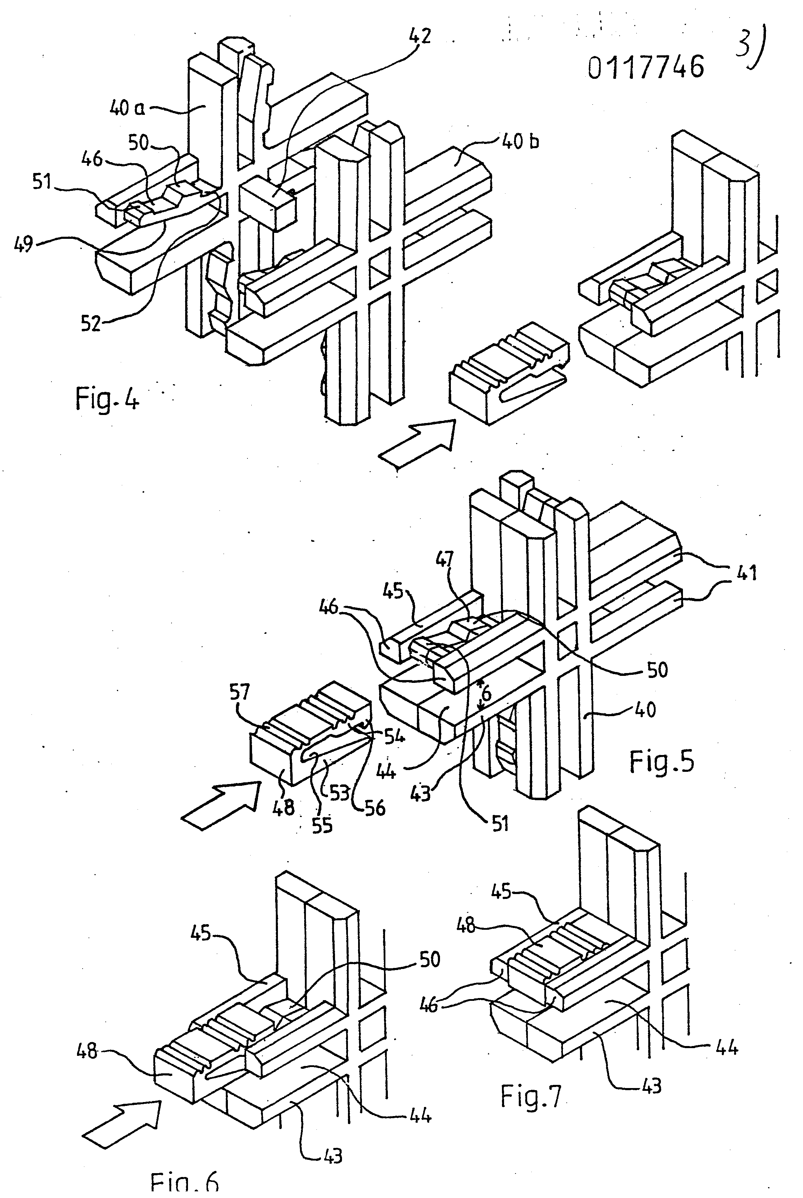

Figures 4 to 7 illustrate an alternative form of connector in accordance with the invention. This connector comprises a cruciform receiving element 40 having four pairs of slot-defining limbs 41. The receiving element is manufactured in two halves 40a and 40b by injection moulding; these halves being joined together via a rectangular-sided spigot 42 on one half locating in a corresponding socket in the other. One of the limbs 43 in each pair provides a generally rectangular planar surface 44 forming one side of the slot. The other limb 45 of each pair comprises two edge portions 46 spanned along part of their length by a guide portion 47 shaped to receive and guide a separate retaining element 48. The guide portion 47 has one surface 48 facing into the slot which is generally planar and slopes towards the slot from the outer end of the guide portion 46. The surface 49 joins the central spine of the receiving element 40. On its surface facing away from the slot the guide portion 46 is shaped to provide outer and inner humps 50 and 51, the outer hump having a bevelled outward end. At its inward end the inner hump 51 has an undercut surface 52 which abuts a hook on the retaining member when the connector is fully assembled.

Each retaining element 48 is generally cuboid in outline but is deeply slotted to provide two jaws 53 and 54 for most of its length. One jaw 53 has an oblique inner surface 55 causing the jaw to taper towards its tip. The other jaw 54 includes an inwardly-facing hook portion 56 along the transverse edge of its free end. The top surface of the jaw 54 includes ribs 57 to enable the retaining member to be gripped.

The connector is used by introducing a glass panel edge-on into a slot of the receiving element 40. The open jaws of the retaining element 48 are then pushed over the outer hump 50 of the guide portion 47 of the receiving element, as indicated by the arrow in Figure 6. As the retaining element 48 is further inserted the jaw 55 is guided by the surface 49 and bears on the adjacent glass panel. Finally the hook portion 56 passes over the inner hump 51 and snaps into position behind the inner hump. The retaining element must therefore be deformed to remove it, thereby preventing accidental removal.

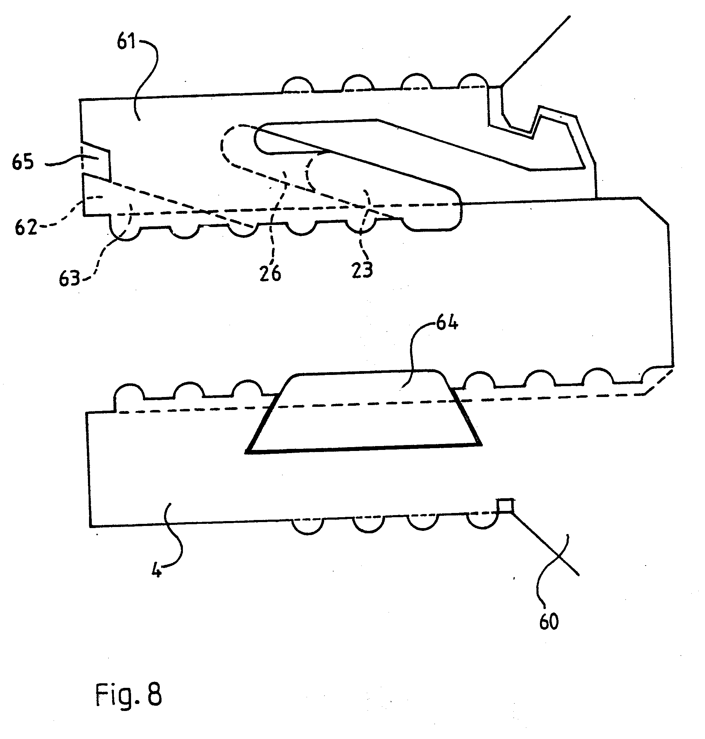

Referring to Figure 8, in an alternative embodiment, the basic structure of a cruciform receiving element 60 and retaining members 61 is the same as that in the embodiments described above. Certain modifications are however introduced which improve the operation of the connector. One of each pair of limbs of the receiving element 60 includes further slots 62 parallel to the slots 26. The retaining member 61 includes further wings 63 parallel to the wings 23 and rearward thereof. The wings 63 engage in the further slots 62.

The limbs 4 of the receiving element 60 includes a pvc pad 64 fitted as a dovetail insert into the engagement surface of the limb 4 so that it projects above that surface. The softness of the pvc allows it to be compressed when a retaining member is fitted and it gives additional friction. The presence of the pad 64 enables the remainder of the material of the receiving element 60 to be made of a harder material than would otherwise be acceptable.

At the rear end surface of each retaining member 61 a transverse slot 65 is included. This slot enables a user to insert his fingernail or a coin and assists in preventing slippage onto the glass panel.

It will be appreciated that many accessories may be used in association with the connector. These may be coupled with the connector using bores through the spines 3 and connecting spigots.

In the foregoing the connectors described are for connecting several panels, but other forms of the connector may include a single slot for receiving a panel together with connectors for other items or it may be part of a larger article, in either case the invention provides means for including a fastened panel within the structure.

CLAIMS

1.     A releasable connector for making an edge-on connection to a panel, comprising:

a receiving element having locating means for receiving and locating a presented edge region of a panel, and

a retaining member adapted for sliding movement with respect to the receiving element, such that it may be slid to a position at which it bears on a presented panel, and including releasable latching means operative to engage the receiving element when the retaining element is slid to said position.

2.     A releasable connector as claimed in claim 1 wherein the locating means comprises a slot defined by the receiving element.

3.     A releasable connector as claimed in claim 1 or claim 2 wherein the latching means comprises a hook portion of the retaining member which by resilient

- 15 -

deformation is caused to engage a complementary recess in the receiving element.

4.     A releasable connector as claimed in any one of claims 1 to 3 wherein the receiving element and retaining member include complementary engageable guide elements, which when engaged guide said sliding movement of the retaining member towards the edge region of the presented panel.

5.     A releasable connector as claimed in claim 4 wherein the guide elements comprise respectively at least one angled slot and correspondingly angled projection.

6.     A releasable connector as claimed in any one of the preceding claims wherein a surface of either the receiving element or the retaining member which when assembled bears on the connector panel includes an insert of a material having a greater compliance than the bulk material, the insert prior to assembly being proud of the adjacent surface and being compressed when the retaining member is slid against a panel.

7.    A releasable connector as claimed in any one of the preceding claims wherein the receiving element and retaining member include mutual engagement means acting to prevent the complete removal of the retaining element when released from the position at which it bears on a presented panel.

8.    A releasable connector as claimed in claim 7 when dependent on claim 5 wherein said mutual engagement means comprises a stop at one end of said angled slot preventing further relative movement of the complementary projection.

9.    A releasable connector as claimed in any one of the preceding claims including a plurality of said receiving elements forming a receiving body and a corresponding number of retaining members, thereby enabling several panels to be interconnected.

10.    A releasable connector as claimed in claim 9 wherein said receiving elements are angularly disposed.

Fig. 1

Fig.2

0117746    3)

40 a
50
46
51
49
52
42
40 b

Fig. 4

47
45
46
57
54
53
56
55
48
44
43
51
50
40
41

Fig. 5

45
50
48
44
43

Fig. 6

45
48
46
50
44
43

Fig. 7

Fig. 8